Europäisches Patentamt

European Patent Office

Office européen des brevets

(11) Publication number: **0 262 743**
**A1**

(12) **EUROPEAN PATENT APPLICATION**

(21) Application number: 87201864.3

(22) Date of filing: 29.09.87

(51) Int. Cl.4: **A01D 43/10** , **A01D 43/00** , **A01D 34/66**

(30) Priority: 30.09.86 NL 8602465

(43) Date of publication of application:
06.04.88 Bulletin 88/14

(84) Designated Contracting States:
DE FR GB NL

(71) Applicant: **C. van der Lely N.V.**
**Weverskade 10 P.O. Box 26**
**NL-3155 ZG Maasland(NL)**

(72) Inventor: **van der Lely, Cornelis**
**7 Brüschenrain**
**ZUG(CH)**

(74) Representative: **Mulder, Herman et al**
**Octrooibureau Van der Lely N.V. Weverskade**
**10 P.O. Box 26**
**NL-3155 ZG Maasland(NL)**

(54) **A mowing machine.**

(57) A mowing machine comprising a frame (4) to which are fitted mowing members (35) which are power-driven about upwardly extending axes of rotation (41), and to which is fitted a crop processing member (61) disposed near the mowing members (35). The machine comprises coupling members (7, 10), by means of which the mowing machine can be coupled to the lifting hitch (8) of a tractor (5) or a suchlike vehicle. The frame (4) is provided near the coupling members (7, 10) with a transmission box (92) containing transmission members, by means of which the mowing members (35) and the crop processing member (61) are drivable from a coupling shaft (55) which extends in the transmission box and can be coupled to the power take-off shaft of a tractor (5) or a suchlike vehicle. The transmission box (92) provides coupling shafts (51, 82, 91), one (51) of which can be coupled to the mowing members (35) and optionally one of the other coupling shafts (82, 91) can be coupled to the crop processing member (61).

FIG. 1

# A MOWING MACHINE

The invention relates to a mowing machine comprising a frame to which are fitted mowing members which are power-driven about upwardly extending axes of rotation, and also having coupling members, by means of which the mowing machine can be coupled to the lifting hitch of a tractor or a suchlike vehicle.

It is an object of the invention to provide a machine of the above-defined type which can be used to advantage under various conditions.

According to the invention, this is accomplished in that the frame is provided near the coupling members with a transmission box containing transmission members, by means of which the mowing members are drivable from a coupling shaft which extends in the transmission box and can be coupled to a power take-off shaft of a tractor or a suchlike vehicle, whereby, measured per unit of length along its overall length, the mowing machine is of a higher weight near the coupling members than per unit of length measured along the length of the mowing machine near the mowing members fitted thereto. Thus, the mowing machine can have a larger working width and can still be located aside a tractor during operation of the machine. The mowing section portion located aside the tractor and comprising the mowing members will be of as light a weight as possible and will load the tractor to the least possible extent. Thus, the tractor and the laterally projecting mowing machine can be moved easily. A further advantage is that the mowing machine can be advantageously lifted upwards by the lifting hitch of a tractor or a suchlike vehicle. Furthermore, it is achieved that in particular the relatively heavy transmission members are positioned midway behind the tractor. Acting thus, that part of the mowing machine that is located more sideways of the tractor needs to have at least less components, so that it becomes of a lighter weight per measured unit of length.

In accordance with a further embodiment, the mowing machine frame according to the invention is provided near the coupling members with a transmission box incorporating transmission members, which transmission box has at least three outgoing coupling shafts, at least one of which is coupled to a drive shaft for driving the mowing members and at least one of which can be coupled to a crop processing member disposed near the mowing members. Thus, a large part of the weight of the mowing machine is moved to near the coupling members of the mowing machine. During operation, this large part of the mowing machine's weight will be advantageously located behind the tractor or a suchlike vehicle, to which the mowing machine is coupled.

In accordance with an advantageous embodiment, the transmission box comprises two exchangeable gear wheels which can be interchanged and/or be exchanged for a different set of gear wheels for driving at least one outgoing coupling shaft of the transmission box. The mowing machine members connected to the coupling shaft can be driven optionally at one of at least two speeds. Consequently, the processing of the crop by the mowing machine can be adapted to various circumstances.

In accordance with a further inventive idea, the mowing machine according to the invention has a working width of approximately 300 cms. Due to the construction in accordance with the invention, it is possible to give in particular the mowing section this larger working width. This renders the mowing machine suitable for fast operation. In addition, due to the construction according to the invention, the mowing machine can be cheap.

In a further mowing machine according to the invention, the mowing member is of such a construction that, in order to perform its mowing operation, it is optionally drivable into one or the other direction about its axis of rotation. Thus, a mowing member can be fitted in different positions for performing its function. Since the mowing member can be driven in two different directions, less separate components are required for manufacturing the mowing machine. This can advantageously influence the manufacture of the mowing machine. In addition, less separate components need be kept in stock as spare parts.

An advantageous processing of the crop with the mowing machine can be obtained when the mowing machine according to the invention includes a crop processing member which is provided near the mowing members and is fitted with spring-steel projections in the form of tines. Hereby, a light and cheap construction is achieved, in particular of the crop processing member.

For a better understanding of the invention and to show how the same may be carried into effect, reference will now be made, by way of example, to the accompanying drawings of an advantageous embodiment of a mowing machine according to the invention, in which drawings:

Figure 1 is a plan view of a mowing machine according to the invention;

Figure 2 is an elevational view of the mowing machine as shown in Figure 1, taken in the direction of the arrow II in Figure 1;

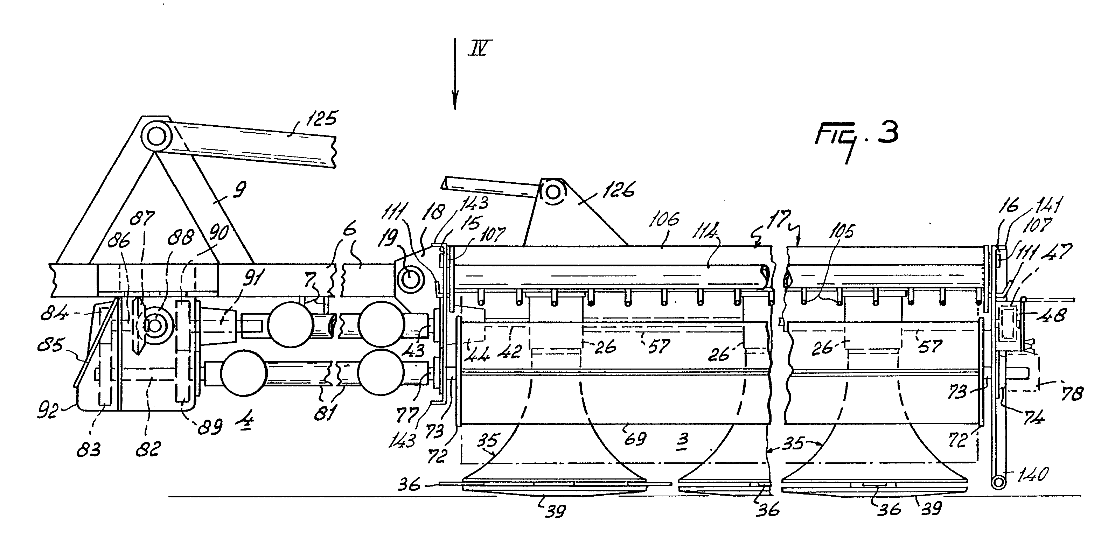

Figure 3 is a rear view of the mowing machine, taken in the direction of the arrow III in Figure 1;

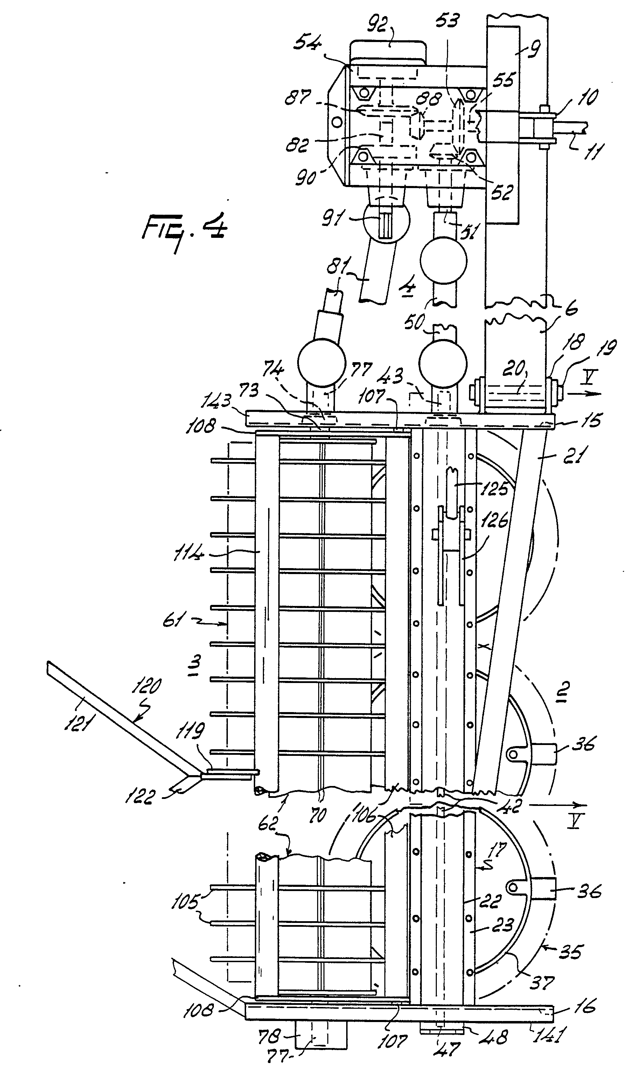

Figure 4 is, to an enlarged scale, a plan view of the mowing machine taken in the direction of the arrow IV in Figure 3;

Figure 5 is, to an enlarged scale, a portion of the mowing machine in a rear view, taken on the line V -V in Figure 3;

Figure 6 is, to an enlarged scale, a cross-sectional view of the mowing machine, taken on the line VI - VI in Figure 5, and

Figure 7 is a plan view of a portion of the mowing machine, taken in the direction of the arrow VII in Figure 6.

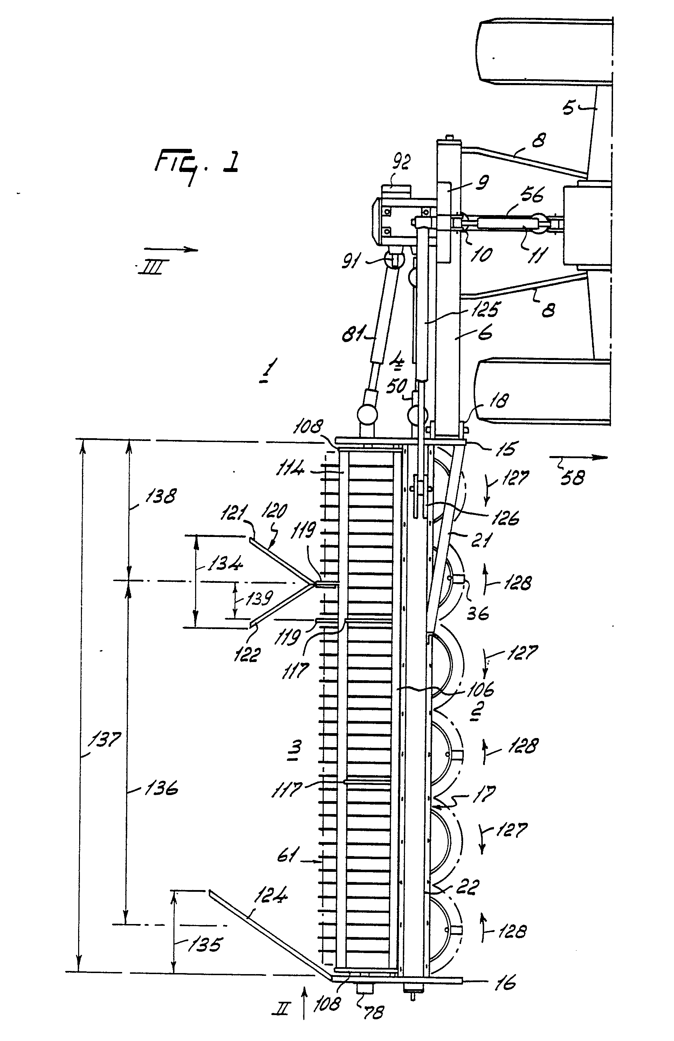

According to the invention, the mowing machine 1 shown in the drawings comprises a mowing section 2 including a processing device 3. The mowing section 2 and the processing device 3 assembly is connected to a carrier frame 4, by means of which the mowing machine can be coupled to a tractor 5 or to a suchlike vehicle, as is shown in Figure 1.

According to the invention, the carrier frame 4 comprises a carrier arm 6 provided with lugs 7, by means of which the carrier frame can be coupled to the lifting arms of the lifting hitch 5. A trestle 9, which is provided with lugs 10 that can be coupled to the top rod 11 of the three-point lifting hitch of the tractor, is mounted on the upper side of the carrier arm 6.

According to the invention, the mowing section 2 comprises two frame plates 15 and 16, between which a frame beam 17 is arranged. The frame plate 15 includes lugs 18 which are coupled pivotally to the carrier arm 6 by means of a shaft 19. The centre line of the shaft 19 constitutes a pivotal axis 20 between the carrier frame 4 and the mowing section 2. The connection of the frame beam 17 to the frame plate 15 is reinforced by a strut 21.

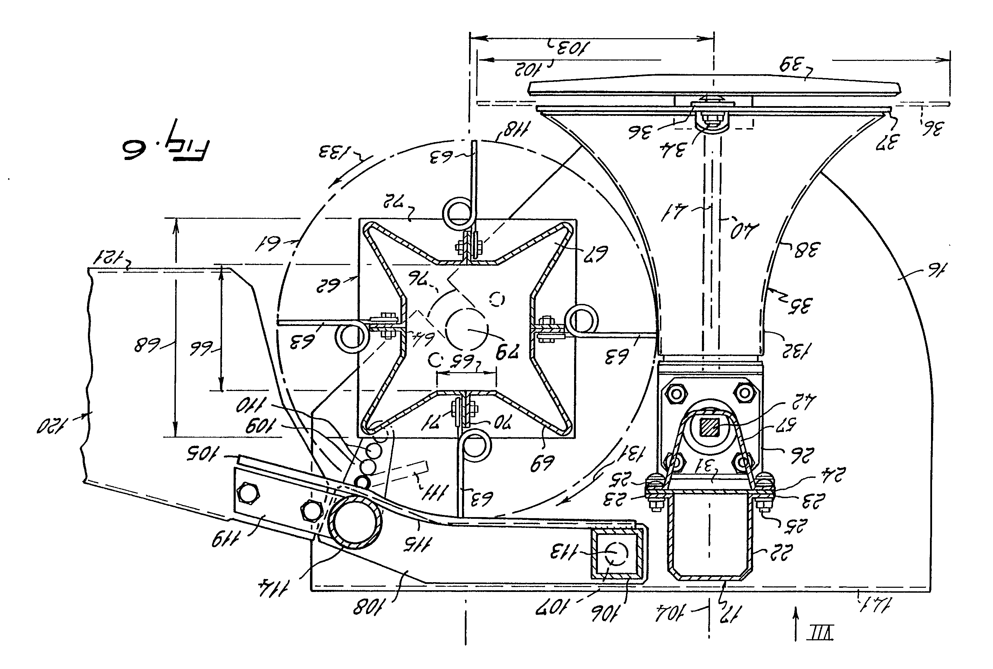

As is apparent in particular from Figure 6, the frame beam 17 is constituted by a U-shaped beam 22 which at its bottom side is provided with edges 23 which are folded over at right angles. The bottom side of the frame beam 17 is formed by a bottom plate 24 which is bolted to the edges 23 by means of bolts 25.

In this embodiment, six gear boxes 26 are fitted against the bottom side of the frame beam 17. The gear boxes 26 are identical and for that reason only one gear box is shown in greater detail. In accordance with the invention, each gear box 26 is a sealed gear box in which a bevel gear wheel 27 is bearing-supported and is connected to a bushing 28. The bushing 28 is bearing-supported (in a manner not shown in further detail) in facing vertical sides of the gear box 26. The bushing 28 is provided with an out-of-round hole 29 extending in the longitudinal direction of the bushing 28. The out-of-round hole 29 constitutes a continuous hole through the gear box 26, the hole forming apertures at those sides of the gear box 26 where the bushing 28 is bearing-supported. The bevel gear wheel 27 meshes with a bevel gear wheel 30 which is bearing-supported (in a manner not shown in further detail) below the bushing 28 in the bottom wall of the gear box 26.

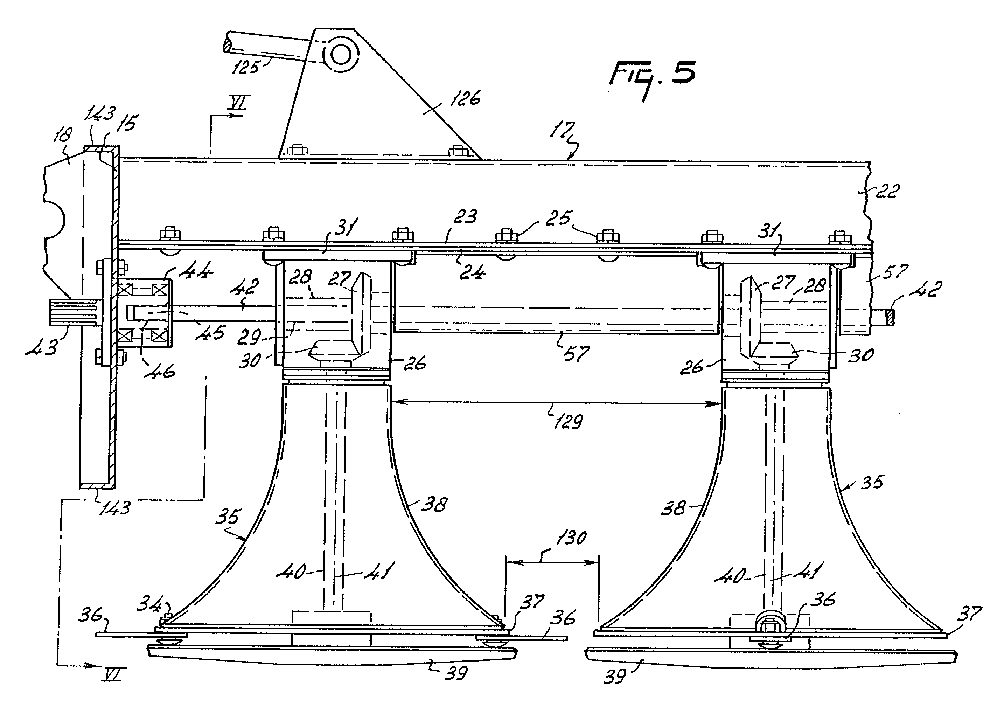

At its bottom side, each gear box 26 is fitted with a mowing member 35. The mowing members mounted on each of the gear boxes are identical and for that reason the construction of only one mowing member will be illustrated in detail. The mowing member 35 shown in Figure 5 and having a construction in accordance with the invention, includes two diametrically opposite mower members 36 designed as mowing knives. The mowing elements 36 are mounted on carriers 37. The mowing members 35 are provided with drum-shaped members 38 which taper upwardly. The bottom sides of the drum-shaped members 38 are substantially contiguous to the upper side of the carriers 37. The lower ends of the drum-shaped members have their periphery located near the connecting members 34, by means of which the mowing elements are connected to the carriers 37. In this embodiment, the drum-shaped members are round and by means of their upper ends extend to near the lower side of the gear boxes 26, the arrangement being such as is shown in particular in Figure 5. In a side view and a rear view (Figures 6 and 5), the upper ends of the drum-shaped members have a periphery which is approximately equal to the width of a gear box 26. In this embodiment, the mowing members 35 have a central carrier shaft 40 which has its upper end bearing-supported in the gear box 26 and is connected to the gear wheel 30. The drum-shaped member 38 extends concentrically around the centre line 41 of the carrier shaft 40. The centre line 41 of the carrier shaft constitutes an axis of rotation for the mowing member 35.

The gear wheels 27 and 30, which form transmission members in the gear boxes 26, are coupled to a drive shaft 42. Below the frame beam 17, the drive shaft 42 extends parallel to the frame beam. The drive shaft 42 reaches into the bushings 28 through the holes 29. At least in the region of the holes 29, the drive shaft 42 is, in a cross-sectional view, substantially equal to the cross-section of the holes 29. These out-of-round cross-sections are such that the bushings 28 are connected rigid against rotation to the shaft 42 when this shaft extends through the holes 29. The drive shaft 42 is coupled to a coupling shaft 43. The coupling shaft 43 is bearing-supported in a bearing housing 44 connected to the frame plate 15. The coupling shaft 43 has an aperture 46 which is equal to the cross-section of the end 45 of the shaft 42, such that the drive shaft 42 is coupled rigid against rotation to the coupling shaft 43. The drive shaft 42 has its end 47, which is located near the frame plate 16, located in a lock housing 48 which is connected to the frame plate 16 and includes a removable cover (not shown). The frame plate 16 is provided with a bore for the drive shaft 42. The end 47 of the drive shaft 42 is formed into a handle which is located such in the housing 48 that, in the mounted condition and the lock housing 48 being closed, the drive shaft 42 cannot move in its longitudinal direction. The coupling shaft 43 is coupled via an intermediate shaft 50 to a coupling shaft 51, on which a bevel gear wheel 52 is mounted. The bevel gear wheel 52 meshes with a bevel gear wheel 53. The bevel gear wheels 52 and 53 constitute transmission members located within a box 54. The bevel gear wheel 54 is provided on a coupling shaft 55 which extends forwardly from the gear box 53 and can be coupled via an intermediate shaft 56 to the power take-off shaft of the tractor 5 or a suchlike vehicle.

Interposed between the gear boxes 26 are protection hoods 56 which are fitted against the bottom side of the frame beam 17 and protect the drive shaft 42.

The mowing members 35, six in this embodiment, are arranged in a row, as is shown in particular in Figure 1. In this situation, the axes of rotation 41 of the six mowing members are located in a plane 104. Near the row of mowing members and, relative to the direction of operative travel 58 of the machine, behind the plane 105 a rotor-shaped processing member 61 is provided. This rotor-shaped processing member of a construction according to the invention, includes a drum-shaped carrier member 62 provided with tine-shaped projections 63. In a cross-sectional view as shown in Figure 6, the carrier member is of a somewhat star-like shape. The carrier member 62 has four sides 64 which form, as it were, part of a square. In this situation, the sides 64 are perpendicular to each other and each have a width 65 approximately equal to half 66 of the distance between two facing sides 64. With respect to the sides 64, the carrier member 62 has four stelliform projections 67 which have walls arranged in the shape of a V. The projections 67 together with those parts of the V-arranged walls that are most remote from each other are connected to the sides 64. The projections 67 extend pairwise from the sides 64 approximately diametrically relative to each other and, seen in cross-section (Figure 6), have outwardly converging sides. The ends of the projections are located in the angular points of a square which has a width 68 which is approximately 1.5 times larger than the distance 66. The carrier member 62 is formed from four equally shaped plate sections 69, each plate section having a projection 67 and half the length of two sides 64. The plate sections 69 have projecting edges 70, by means of which they are bolted to each other by means of bolts 71. At the ends of the carrier member end plates 72 are disposed which are square and have sides of a length equal to the distance 68. Stub axles 73, by means of which the carrier member is rotatably supported in bearings 74, are provided on the end plated 72. The bearings 74 are located in slotted holes 76 provided in the frame plates 15 and 16. The bearings 74 are bolted to these frame plates by means of bolts 75. The stub axles 73 are inserted through the bearings 74 and extend to outside these bearings by means of their ends 77. A protection hood 78, which is arranged around the end 77 and is coupled to the bearing 74, is provided near the frame plate 16. Connected to the end 77 of the stub axle 73 located near the frame plate 15 is an intermediate shaft 81 for driving the processing member 61 around the centre line 79 of the stub axles 73. The centre line 79 then constitutes an axis of rotation for the rotor-shaped processing member 61.

The intermediate shaft 78, disposed in accordance with the invention, is connected to a shaft 82 which is bearing-supported in the gear box 54. The shaft 52 is coupled to a shaft 86 by means of gear wheels 83 and 84. The gear wheels 83 and 84 constitute change gear wheels which are interchangeable and can be exchanged for other gear wheels. The gear wheels 83 and 84 are accommodated in a change gear box 92 fitted to the gear box 54. The change gear box 92 is covered by an easily removable cover 85 and is separated by a wall from the space enclosed by the box 54. The change gear wheel 84 is disposed on a shaft 86, which is coupled via a bevel gear wheel 87 to a bevel gear wheel 88 mounted on the shaft 55. Inside the box 54, the shaft 82 has a gear wheel 89 which meshes with a gear wheel 90. The gear wheel 90 is mounted on a coupling shaft 91.

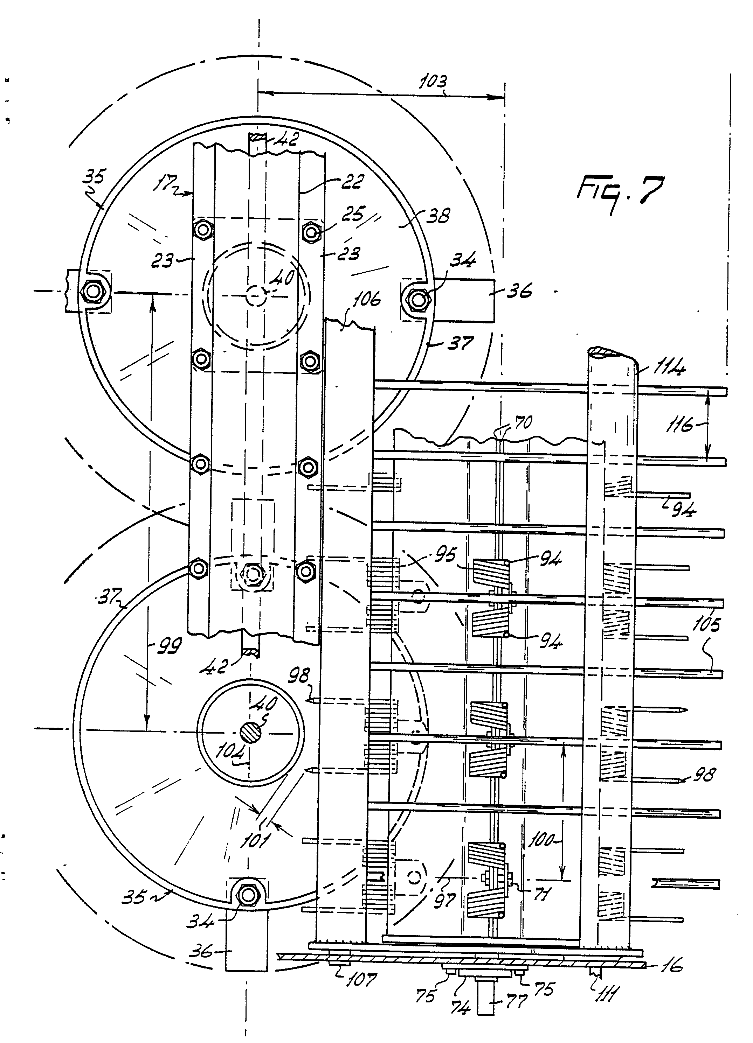

The tine-shaped projections 63 of the processing member 61 each have two tines 94 which are interconnected via turns 95 and are bolted to the carrier member 62 by means of the bolts 71. The turns 94 have their centre lines located in planes which are perpendicular to the axis of rotation 79 of the processing member 61, as is shown in particular in Figure 7. The centre lines of bolts 71, by means of which the tine-shaped projections 63 are bolted to the carrier member 62, are located in each plane 97 which comprises the axis of rotation of a mowing member 55 and extends in the direction of operative travel. Tines 94, whose end portions 98 are pointed or in the form of knives and constitute cutters, are located on both sides of this plane 97. Only those tines 94 of the tine-shaped projections 63 which are secured by means of bolts 71, whose centre lines are located in the plane 97, are provided with these end portions 98. The tines 94 of the projections 63 which are connected remote from the planes 97 to the carrier member 62, are not provided with sharpened end portions 98 and have straight extreme ends, the arrangement being such as is illustrated in Figure 7. The extreme ends of the end portion 98 are thinner than those portions of a tine 94 that are remote from the extreme ends. Two additional tine-shaped projections 63 are bolted between adjacent planes 97 to the carrier member 62 via two contiguous edges 70 by means of two bolts 71. Thus, adjacent tine-shaped projections 63 are spaced apart by a distance 100 which is equal to 1/3 of the distance 99 between two adjacent planes 97. In this embodiment, the planes 97 are spaced apart by a distance 99 of approximately 50 cms. In this situation, the tips of the diametrically opposite knife elements of a mowing member 35 are removed from each other by a distance 102 which slightly exceeds 50 cms. The axis of rotation 79 of the rotor-shaped processing member 61 is located behind the plane 104 at a distance which is approximately equal to half the diameter 102, the arrangement being such as is shown in particular in Figure 6. Assuming the axes of rotation 41 to be in the vertical position, the shaft 79 is located below the upper side of the drum-shaped members 38 of the mowing members 35.

Above the rotor-shaped processing member 61 there are arranged processing members which co-operate with the processing member 61 and in this embodiment are designed as rods 105. Seen in the direction of operative travel 58, the rods 105 have their front side connected to a carrier beam 106. At its ends, the carrier beam 106 is provided with journals 107, by means of which the carrier beam 106 is pivotally bearing-supported in the frame plates 15 and 16, which is not shown in further detail. Supporting strips 108 are connected to the ends of the carrier beam 106. The supporting strips 108 extend rearwardly from a carrier beam 106 and, near their ends, are provided with downwardly directed lugs 109. The lugs 109 are provided with a row of holes 110 which are located concentrically around the centre line 113 of the carrier beam 106. A locking pin 111 can optionally be inserted through one of the holes 110. In addition, the locking pin 111 can be inserted through one of the holes 112 which are applied in the respective frame plates 15 and 16 in accordance with a curve around the centre line of the carrier beam 106. The holes 112 are removed from each other at distances different from those separating the holes 110. The ends of the supporting strips 108 are interconnected by a connecting beam 114, which in this embodiment is a round tube. The connection of the tube 114 to the frame beam 106 is further reinforced by two supporting strips 117 which are equally distributed over the spacing between the supporting strips 108. The rods 105 are fastened against the bottom side of the connecting beam 114. The rods 105 have a curved portion 115 which, in the vertical position of the plane 104, extends from approximately straight above the pivotal shaft 79 to near the bottom side of the connecting beam 114. The rods 105 extend rearwardly to beyond the connecting beam 114 through such a distance that the ends of the rods 105 are located slightly further to the rear than the imaginary cylinder surface 118 along which the tips of the tines 94 move on rotation of the processing member 61, the arrangement being such as is shown in particular in Figure 6. The curved portion 115 is of a length approximately equal to the distance through which the rods 105 extend behind the tube 114.

Two supporting strips 119 are fitted to the connecting beam 115. Optionally, a crop separating member 120 can be connected to one of the supporting strips 119. The crop separating member has two rearwardly diverging swath boards 121 and 122, the ends of which are spaced from each other by a distance which slightly exceeds or is at least approximately equally large as the width of an average tractor wheel. The crop separating member 120 is remote from those ends of the processing member 61 that are located near the frame plates 15 and 16. A swath board 124 is fitted to the frame plate 16 near the free end of the mowing section 2.

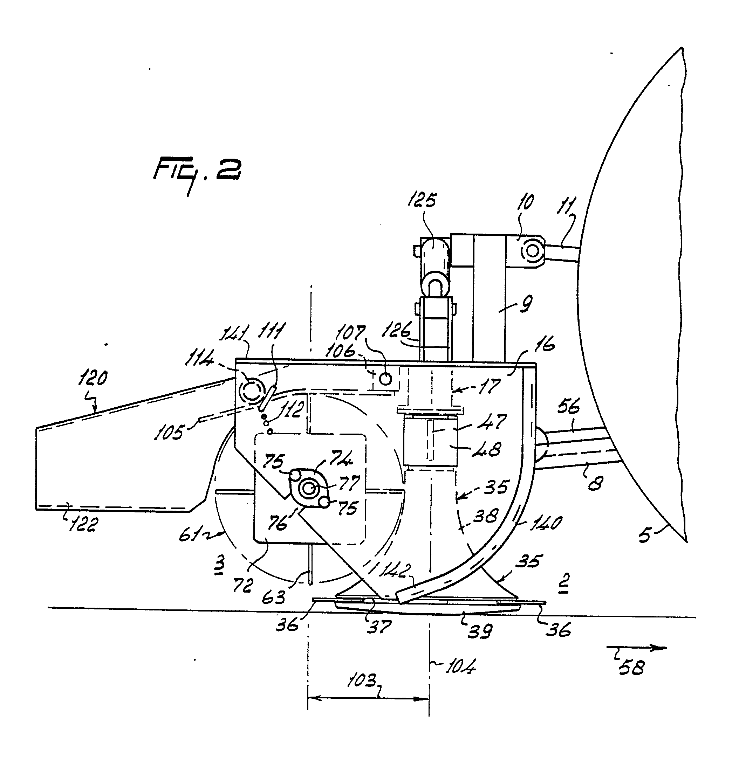

Near the frame plate 15, the frame beam 17 is provided with lugs 126, between which there is pivotally arranged the end of a lifting member which includes a lifting cylinder 125 and extends between the lugs 126 and the upper side of the trestle 9. The frame plates 15 and 16 extend by means of their upper side 141 to the upper side of the beam 17. The front side 140 of the plates 15 and 16 is located, in a side view (Figure 2), above the front side of the mowing members 35 and the paths described by the knives 36 during operation. At its front side, the plate 16 is provided with a tubular supporting edge which reaches by means of its lower end 142 to near the bottom side of the mowing member 35. The lower end 142 extends, in a direction taken from above the tube 140, rearwardly to behind the plane 104. The plate 15 has outwardly folded stiffening edges 143. Such a stiffening edge is also provided at the upper side of the plate 16.

During use of the mowing machine, it is coupled by means of the carrier frame 4 to the lifting hitch of a tractor or a suchlike vehicle. To achieve this coupling, the coupling shaft 55 is coupled to the power take-off shaft of the tractor 5 by means of an intermediate shaft 56, the arrangement being such as is shown in particular in Figures 1 and 2.

When the implement moves in the direction indicated by the arrow 58, the row of mowing members 35 is located transversely thereto. During operation, the mowing members 35 are caused to rotate in a direction indicated by the arrows 127 and 128. In this situation, adjacent mowing members move in the opposite direction to each other around their axes of rotation 41. In this situation, the mowing members 35 at the ends of the row move such that the forwardly facing sides move towards each other. The drive is effected from the power take-off shaft via the transmission members 53 and 52 and the intermediate shaft 50 to the drive shaft 42. By means of the transmission members 27 and 30 accommodated in the gear boxes 26 the drive shaft 42 induces the mowing members to rotate. Because of the opposite directions of rotation 127 and 128 of adjacent mowing members, the crop mown by the mowing elements 36 will move rearwardly between two adjacent mowing members with respect to the direction of operative travel 58. The drum-shaped members 38 of the mowing members 35 will constitute together with the mowing elements a conveyor for the mown crop. Because of the large diameter of the lower ends of the drum-shaped members 38, the crop mown by the mowing elements 36 can be appropriately picked up and conveyed by the members 38. The upwardly tapering drum-shaped members provide a large space between adjacent mowing members 35. The distance 129 is particularly large between the upper ends. This distance 129 is twice or more times larger than the distance 130 between the lower ends of the drum-shaped members 38 of the adjacent mowing members 35. In this embodiment, the distance 129 is more than three times larger than the distance 130. Consequently, in particular when a large quantity of crop is mown per unit of length to be mown, the large quantity of crop will, whilst being moved to the rear between the two drum-shaped members, be forced upwardly via the upwardly widening space towards the distance 129. Hereby the mown crop will loosely be moved to the rear. The crop will be picked up at the rear side of the drum-shaped members 38 by the rotor-shaped processing member 61. Thus, the rotor-shaped processing member constitutes a further conveyor member for the crop.

The rotor-shaped processing member is driven via the intermediate shaft 81 and the transmission members formed by the different gear wheels in the box 54. In the embodiment shown, in which the intermediate shaft 81 is coupled to the shaft 82, the rotor-shaped processing member 61 rotates in the direction indicated by the arrow 131. On rotation of the processing member 61 in the direction indicated by the arrow 131, the crop moved rearwardly by the mowing members 35 is taken along in the upward direction by the processing member 61 and is moved between the rods 105 and the rotor-shaped member 61. The crop is then caught in particular by the tines 94. The crop picked up by the rotor-shaped processing member 61 is pushed during rotation in the direction of the arrow 131 against and/or between the rods 105, so that the crop can be subjected to a predetermined processing operation. During this processing operation, the crop can be broken or crushed to some extent, which may advantageously influence the drying of the crop after it has been deposited on the soil behind the mowing machine after having been passed between the rods 105 and the rotor-shaped processing member 61. Breaking and crushing of the crop advantageously influences a loose deposition of the crop on the soil. The position of the connecting element 114 contributes to the breaking and crushing of the crop, in particular when the tines 94 move past the element 114. The portion 115 is also of importance for the processing of the crop. The rods 105 are disposed such that they are located between the paths described by the tines 94 during operation. Therefore, the number of rods 105 is approximately equal to the number of tines 94 in a row.

The position of the rods 105 can be adjusted relative to the rotor 61 by moving the rods about the pivotal shaft 113 of the carrier beam 106. This adjustment can be effected by inserting the locking pin 111 into a different hole 110 or into a different hole 112, respectively. The rods 105 can then become located between the tips of the tines 94 which move about the axis of rotation 79. The crop will then be pushed by the tines 94 to some extent between the adjacent rods 105, so that a more intense processing of the crop can be achieved. The tines 94, which during rotation of the rotor-shaped processing member 61 most closely approach the periphery of the drum-shaped member 38, have pointed end portions 98. During their rotation, the tips of the end portions 98 move closely along the periphery of the relevant drum-shaped member 38. The end portions 98 then move at a short distance 101 from the periphery of the drum-shaped member 38. In a side view, the periphery of the drum-shaped member 38 is formed such that it is curved in the vertical direction and the concave side faces outwardly. The upper end 132 of the drum-shaped member 38, which is higher than the shaft 79 at a vertical position of the plane 104, is approximately cylindrical. Lower downwardly the periphery is curved, the centre of this curve being approximately in the region of the shaft 79. However, the radius of curvature is larger than that of the imaginary cylinder plane 118 through which the tips of the tines 94 pass during rotation of the processing member 61. In a side view as shown in Figure 6, the imaginary cylinder surface 118 is approximately contigu ous to the rear sides of the periphery of the drum-shaped members 38 of the adjacently arranged mowing members 35. Those sides of the members 38 that face rearwardly towards the processing member 61 are hollow. Because of the location of the mowing members near the periphery of the processing member 61, the crop moved rearwardly by the mowing members 35 can be picked up appropriately by the processing member 61. A rather large space is present between the drum-shaped carrier member 62 and the rods 105 as a result of the space bounded by adjacent projections 67 and interposed wall portions 64, so that rather large quantities of crop can be passed between the member 61 and the rods 105. In this situation, the projections 67 positively influence the conveyance of the crop. Thus, also large quantities of crop will not be clamped to an excessive extent between the rods 105 and the processing member 61. Thus, the crop will not be damaged when being moved between the member 61 and the rods 105, even when large quantities of crop are mown per unit of time.

The conveyance action and the processing mode of the crop between the member 61 and the grid constituted by the rods 105 can additionally be influenced by controlling the speed of rotation of the rotor-shaped processing member 61. Change wheels 83 and 84 are mounted in the change wheel box 92 for this purpose. By interchanging these gear wheels and by changing them for other gear wheels, the speed of rotation of the shaft 82 can be altered for the same number of revolutions of the power take-off shaft of the tractor.

If no processing of the crop between the rods 105 and the rotor-shaped processing member 61 is required, the direction of rotation of the processing member 61 can be inverted. For that purpose the gear wheels 89 and 90 are provided in the gear box 54, the gear wheel 90 being connected to the coupling shaft 91 which projects from the gear box 54. The intermediate shaft 81 can optionally be connected to the coupling shaft 91 instead of to the coupling shaft 82. Due to the coupling of the intermediate shaft 81 via the coupling shaft 91 and the gear wheels 90 and 89 to the shaft 82, the direction of rotation of the processing member 61 will be opposite to the direction of rotation 131. On rotation of the processing member 61 in the sense indicated by the arrow 133 (Figure 6), the crop moved rearwardly between the drum-shaped members 38 will be conveyed downwardly by the tines 94 and be deposited in a rearward direction on the soil. The crop will then not be pressed by the tines 94 or an other member, so that processing of the crop will be less intense. The turns 95 have been provided such that at the direction of rotation 131 the force the crop exercises on the tines will try to wind up the turns 95. When the member 61 rotates in the direction indicated by the arrow 133, the tines 94 will wind down under the pressure of the crop and will consequently deflect more easily. This will allow the crop to move rearwardly in a less coherent manner, passing below the processing member 61. If, in the direction of rotation 133, a more intense gripping of the crop by the tines 94 is desired, then the rotor-shaped processing member 61 can be removed from between the frame plates 15 and 16. Thereafter, after having been inverted, the processing member can be replaced between the frame plates in such a manner that, relative to the direction of rotation 133, the turns 95 are located behind the tines 94. The tines 94 are thus prevented from moving smoothly to the rear relative to the direction of rotation 133 and they will catch the crop with greater force. Hereby the crop can be slightly broken or crushed. To enable this inversion of the rotor-shaped processing member relative to the frame plates 15 and 16, the intermediate shaft 81 can be removed from the end 77 of the relevant stub axle 73. The ball-bearings 74 are also removed from the plates 15 and 16 to allow the processing member 61 to be detached from the frame plates to be rotated in such a way that the stub axle 73, which was originally coupled to the intermediate shaft 81, is moved to near the frame plate 16 and the other stub axle 73 can be coupled to the intermediate shaft 81. The protective hood 78 is then transferred to the other bearing 74. The radially extending tines 94 have a crop processing function because of the fact that they are under spring load relative to the carrier 62.

In particular when the rotor-shaped processing member 61 is moved about its shaft 79 in the direction indicated by the arrow 131, the crop separating member 120 will deposit the crop moving along the boards 121 and 122 on the soil in such a manner that a strip 134, which is free from crop, is formed behind the crop separating member 120. In a subsequent operating run, this strip 134 can serve as a track for a tractor wheel. The crop-free strip 135 formed behind a swath board 124 can serve as a track for the other wheel of the tractor. Thus, strips 134 and 135 constitute tracks for the tractor wheels when a subsequent operating run is performed. When performing such a subsequent operating run, the tractor wheels or the wheels of another vehicle moving the mowing machine will not run over and compress the mown crop which is loosely deposited by the rotor-shaped processing member 61. The spacing 136 between the tracks 134 and 135 can be changed by mounting the crop separator 120 optionally to one of the two strips 119. The two supporting strips are spaced apart by e.g. a distance 139 of 20 cms, so that the track width 136 can optionally be chosen for two positions with a difference of 20 cms. It will be obvious that alternatively more supporting strips 119 can be provided to have a wider choice of distances 136.

According to the invention, the gear box 54, which incorporates transmission members constituted by gear wheels, is located behind the tractor. Then this gear box is mounted, seen in the direction of operative travel 58, midway between the pairs of lugs 7, by means of which the carrier frame 4 can be coupled to the lifting arms of the lifting hitch of the tractor. The gear box 54 is of a considerable weight. By positioning the gear box 54 near that side of the frame 4 that can be coupled to the vehicle, e.g. a tractor, a significant part of the weight of the machine is shifted to the midway point behind the tractor. The direct connection of the several transmission members via the respective intermediate shafts 50 and 81 to the drive shaft 42 for driving the mowing members and the stub axles 73 of the processing member 61, respectively, obviates the necessity of providing heavy machine parts, such as transmission means in a gear box near the mowing section 2. Consequently, the mowing section 2 together with the processing member 3 will be of a lighter weight per running unit of length. Thus, a comparatively light portion of the machine will be located aside the machine, which is advantageous to the distribution of the overall weight of the machine with respect to the tractor. The machine can therefore have a larger working width. In this embodiment, the working width of the six mowing members is therefore approximately 316 cms. Because of the light weight per running unit of length, the working width can be that large without any detrimental effect on the weight distribution of the machine and the tractor, when this unit is used on an uneven field. As a result thereof, the lateral forces on the tractor are low. Additionally, the machine can be easily lifted by the lifting hitch. The construction of the mowing member 35 is also simple, so that the mowing member is of a relatively low weight. The member 38 so reinforces the construction of the mowing member 35 that this member can be of a low weight. The shaft 40 constitutes, together with the member 38, a rigid unit to drive the mowing unit which comprises the carrier 37 and the knives 36. If so desired, the shaft 40 may be omitted and only the drum-shaped member 38 can then be used as a drive means between the gear box and the mowing element. The member 38 then carries the mowing element.

So as to ensure that at the large working width 137 of approximately 316 cms the wheels of the tractor will not run in a subsequent operating run over the processed crop, the crop separating member 120 is applied remote from the ends of the overall working width of the mowing section 2. In this situation, the crop separating member 120 is located at a lesser distance 138 from the end facing the tractor. This distance 138 may differ according as the crop separating member is optionally mounted to one of the two supporting strips 119. In spite of the large working width of the mowing section 2, the ratio of the weight of the mowing section 2 to the overall weight of the machine will be advantageous to such an effect that the centre of gravity of the entire machine will not be located too far outside the tractor. It is then of advantage for the gear box 54 to be located at a large distance from the mowing section 2 or from the end of the carrier arm 6 to which the mowing section 2 is fitted, respectively.

The mowing members 35 are all identical, which also holds for the gear boxes 26. The gear boxes 26 are of such a construction that they can optionally be mounted in the position shown in the left-hand or the right-hand side of Figure 5. For that reason the connecting plates 31 are of a symmetrical structure with respect to the planes 97, so that they can optionally be coupled in one of two positions to the frame beam 17 by means of the bolts 25. The units formed by the gear boxes 26 and the mowing members 35 can be fitted to the frame beam 17 or be detached therefrom independently of each other, after removal of the drive shaft 42. The drive shaft 42 can easily be mounted or removed by inserting them into or remove them from the apertures 29, in the longitudinal direction. When a mowing member 35 or a gear box 26 is damaged, the damaged unit can consequently easily be replaced by another unit consisting of a gear box 26 and a mowing member 35. The gear boxes 26 are sealed boxes, so that no lubricants can escape when the boxes are detached from the beam 17. Consequently, damaged parts can easily be changed in the field. Inversion of the gear boxes 26 renders it also possible to reverse the direction of rotation of the mowing members. If, for example, a small quantity of crop is to be mown, it is possible to mount one half of the number of gear boxes 26 with mowing members 35 located adjacently to each other in such a way that they rotate in the same direction, whilst the other half of the row of adjacent mowing members are given the same rotation, but in the opposite direction. The left-hand half of the row of mowing members can then, for example, be induced to rotate in the direction indicated by the arrow 127, whilst the right-hand half, seen in Figure 1 in the direction of travel 58, can be induced to rotate in the direction indicated by the arrow 128. The mown crop can then be moved rearwardly between the two centremost mowing members and be deposited in a narrow swath. Each half of the row of mowing members consisting of three mowing members then processes approximately 160 cms of the working width. A mowing section may also consist of only three mowing members and then have a total working width of approximately 160 cms. Because of its structure as shown, the mowing section is of a low weight and of a simple construction.

During operation, the mowing section will bear on the soil by means of its supporting members 39 in order to be able to follow the unevennesses of the soil in an advantageous manner. Thus the area to be mown can advantageously be mown evenly. In order to transfer optionally part of the weight of the machine during operation to the tractor, a spring-loaded construction may be disposed between the mowing section 2 and e.g. the upper side of the trestle 9. On locking of the carrier frame 4 in the lifting hitch of the tractor 5, the spring-loaded construction can transfer part of the weight of the mowing section to the tractor. The mowing section will then only bear on the soil with part of its weight via the supporting members 39. This may be of influence in order to have the mowing section 2 follow unevennesses in the desired manner and/or to have the supporting members bear more or less heavily on the soil or more or less heavily on top of the stubbles. The mowing machine can be adjusted to a transport position by moving the mowing section 2 upwardly through 90° relative to the carrier arm 6 by pivoting the lifting hitch 125 about the pivotal shaft 20. In this connection, it is also advantageous for the mowing section 2 to be of a low weight.

Although in this embodiment the gear boxes 26 are mounted under the frame beam 17, it is in principle also possible to construct the gear boxes 26 in such a way that they can be mounted, for example, in front of or behind the frame beam 17. The protective hoods 57 are provided in particular in those regions where crop is moved rearwardly between two adjacently arranged drum-shaped members 38. The protective hood 57 then prevents crop moving rearwardly between two mowing members 35 from being caught by the drive shaft 42 and from being wound thereabout. Since the mowing members 35 disposed at the ends of the row of mowing members rotate in the direction as indicated by the respective arrows 127 and 128, a protective hood 57 will not be required and, therefore, not be mounted between the relevant frame plates 15 and 16 and the gear boxes 26 located nearest to these frame plates. Therefore, in Figure 5 no protective hood 57 is provided between the frame plate 15 and the gear box 26. It will be obvious that it is also possible to provide a protective hood 57 in that region.

The invention is not limited to the features described in the foregoing but also relates to all the details shown in the drawings, whether they have been described or not.

## Claims

1. A mowing machine comprising a frame (4) to which are fitted mowing members 35) which are power-driven about upwardly extending axes of rotation (41), and also having coupling members (7, 10), by means of which the mowing machine can be coupled to the lifting hitch (8) of a tractor or a suchlike vehicle, characterized in that the frame (4) is provided near the coupling members (7, 10) with a transmission box (92) containing transmission members, by means of which the mowing members (35) are drivable from a coupling shaft (55) which extends in the transmission box and can be coupled to a power take-off shaft of a tractor (5) or a suchlike vehicle, whereby, measured per unit of length along its overall length, the mowing machine is of a higher weight near the coupling members (7, 10) than per unit of length measured along the length of the mowing machine near the mowing members (35) fitted thereto.

2. A mowing machine as claimed in claim 1, characterized in that the transmission box (92) comprises two meshing bevel gear wheels (53, 52), one of which is mounted on the coupling shaft (55) which can be coupled to the power take-off shaft of a tractor, whilst the other bevel gear wheel (52) is coupled to an intermediate shaft (50) which is connected to a drive shaft (42) which extends along the mowing members (35) and is coupled thereto.

3. A mowing machine as claimed in claim 1 or 2, characterized in that the mowing machine includes a crop processing member (61) which is disposed near the mowing members (35) and is drivably connected to transmission members (87, 81, 89, 90) in the transmission box (92), which transmission box (92) has at least three outgoing coupling shafts (51, 91, 82), at least one (51) of which can be coupled to a drive shaft (42) for driving the mowing members (35) and optionally one of at least two coupling shafts (82, 91) can be coupled to the crop processing member (61) for optionally driving the processing member (61) in the opposite direction.

4. A mowing machine as claimed in claim 3, characterized in that the transmission box (92) contains two meshing spur gears (89, 90) which are each coupled to a coupling shaft (82, 91) of the transmission box, said two spur gears (89, 90) being provided with a plurality of identical teeth.

5. A mowing machine as claimed in claim 4, characterized in that the transmission box (92) comprises two sets of gear wheels (83, 84) which are interchangeable and/or can be exchanged for a different set of gear wheels for driving at least one outgoing coupling shaft (82, 91) of the transmission box.

6. A mowing machine as claimed in any one of the preceding claims, characterized in that, seen in plan view, the transmission box (92) is disposed at the rear side of a carrier arm (6) of a support, by means of which the mowing machine can be coupled to the lifting hitch (8) of the tractor or a suchlike vehicle.

7. A mowing machine as claimed in any one of the preceding claims, characterized in that the mowing members (35) are connected to gear boxes (26), said gear boxes being optionally connectable in one of at least two positions to a frame beam (17) and the transmission members in the gear boxes (92) being arranged such that, when the gear box (92) is rotated relative to the frame beam (17), the direction of rotation of the mowing members is adjustable.

8. A mowing machine as claimed in claim 7, characterized in that the drive shaft (42) extends to a recess in each of the gear boxes, which recess is formed by a bushing-shaped member (28) which includes a bevel gear wheel (27) and is bearing-supported in the gear box (26) in such a manner that it provides a seal.

9. A mowing machine as claimed in any one of the preceding claims, characterized in that at its upper side a mowing member (35) has a body (38) which in the upward direction is of a decreasing cross-section, the arrangement being such that the distance between two adjacent mowing members (35) increases from the bottom to the top.

10. A mowing machine as claimed in any one of claims 3 to 9, when appendant on claim 3, characterized in that the crop processing member (61) includes a drum-shaped carrier member (62) which consists at least partly of plate-shaped sections (69) and is provided with spring-loaded tines (63).

11. A mowing machine as claimed in any one of claims 3 to 10, when appendant on claim 3, characterized in that the crop processing member (61) is attached easily removably to frame plates (15, 16) of the frame of the mowing machine, which frame plates (15, 16) are disposed near the ends of the row of mowing members (35), the drive shaft (42) for the mowing members (35) and/or a shaft (77) of the crop processing member (61) being bearing-supported in a frame plate (15) and having coupling ends to which can be applied intermediate shafts (50, 81) which can be coupled to the transmission member in the transmission box (92).

12. A mowing machine as claimed in any one of the preceding claims, characterized in that a screen (124) is arranged near one end of the mowing section (2) of the mowing machine, which screen (124) is constituted by a frame plate (16) of the frame of the implement, whose front side (140) extends such from top to bottom that the lower end, seen from the upper side, extends rearwardly relative to the direction of operative travel (58) of the mowing machine and is located near a mowing member (35).

FIG. 1

FIG. 2

FIG. 3

FIG. 4

FIG. 5

0 262 743

Fig. 6

FIG. 7

| | **DOCUMENTS CONSIDERED TO BE RELEVANT** | | EP 87201864.3 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | FR - A1 - 2 563 686 (VAN DER LELY)<br>* Fig. 1,2 * | 1,3 | A 01 D 43/10<br>A 01 D 43/00<br>A 01 D 34/66 |
| A | DE - A - 2 230 245 (MASCHINEN-FABRIK BERNHARD KRONE GMBH)<br>* Fig. 1,2; page 4, lines 1-12 * | 1,2 | |
| A | DE - A1 - 2 407 821 (JOSEF BAUTZ GMBH)<br>* Fig. 1-3; page 3, lines 8-20 * | 1,2 | |
| A | US - A - 4 625 583 (KRONOGARD)<br>* Fig. 2 * | 3,4 | **TECHNICAL FIELDS SEARCHED (Int. Cl.4)** |
| A | GB - A - 1 578 594 (KUHN)<br>* Fig. 1 * | 3,10 | A 01 D 34/00<br>A 01 D 43/00<br>A 01 D 49/00 |
| A | DE - A - 1 936 054 (GEBR. BUSATIS)<br>* Fig. 1,3,4 * | 7,9, 12 | A 01 D 69/00<br>A 01 D 80/00<br>A 01 D 82/00<br>F 16 H 37/00 |

The present search report has been drawn up for all claims

| Place of search | Date of completion of the search | Examiner |
|---|---|---|
| VIENNA | 30-11-1987 | HAVLIK |